# EUROPEAN PATENT SPECIFICATION

(11) **EP 4 110 085 B1**
(45) Date of publication and mention of the grant of the patent: **22.07.2026**
(21) Application number: 21708578.6
(22) Date of filing: 23.02.2021
(51) Int. Cl.: A23L 29/238, A23L 2/56, A23L 2/60

(54) **TASTE MODIFYING INGREDIENT**
GESCHMACKSMODIFIZIERENDER INHALTSSTOFF
INGRÉDIENT MODIFIANT LE GOÛT

(30) Priority: 28.02.2020 US 202062983044 P
(43) Date of publication of application: 04.01.2023
(73) Proprietor: Givaudan SA, 1214 Vernier (CH)
(72) Inventor: BHOWMIK, Tarun, Mason, Ohio 45040 (US)
(74) Representative: Global Patents
(86) International application number: PCT/EP2021/054433
(87) International publication number: WO 2021/170576

(56) References cited:
- WO-A1-2008/018627
- WO-A1-2018/222818
- JP-A- 2018 102 308
- DATABASE MEDLINE [online] US NATIONAL LIBRARY OF MEDICINE (NLM), BETHESDA, MD, US; 27 June 2019 (2019-06-27), KALAM AZAD MD OBYEDUL ET AL: "Effect of Different Processing Methods on the Accumulation of the Phenolic Compounds and Antioxidant Profile of Broomcorn Millet (Panicum miliaceumL.) Flour.", XP002803175, Database accession no. NLM31252701
- FOODS (BASEL, SWITZERLAND) 27 JUN 2019, vol. 8, no. 7, 27 June 2019 (2019-06-27), ISSN: 2304-8158

## Description

### TECHNICAL FIELD

The present disclosure relates to methods for making taste modifying ingredients using millet(s) and the taste modifying ingredients made by the methods. More particularly, the present disclosure relates to flavour compositions and consumables comprising the taste modifying ingredients and the uses of the taste modifying ingredients in consumables, for example to improve mouthfeel of consumables and/or mask off-notes of consumables and/or reducing or eliminating a perception of astringency in consumables and/or improve sweetness of consumables. The present invention is according to claims 1 to 14.

### BACKGROUND

Compounds for modifying the taste of consumable products, that is, products taken orally either for ingestion or spitting out, such as foodstuffs, beverages, confectionery, oral care products and the like are widely used. They do not themselves add flavour to the consumable, but they provide desirable ancillary benefits, such as enhanced mouthfeel and/or sweetness or masking undesirable characteristics of other ingredients, such as the distinctive tastes and textures perceived as unappealing of products containing non-animal derived proteins. For example, products made from leguminous plants, such as soy or pea, display a flavor profile described as grassy, beany, green, earthy, nutty and/or bitter.

Additionally, astringency is a common and costly problem for the food and beverage industry. Astringency is defined by the American Society for Testing and Materials (ASTM, 2004) as the complex of sensations due to shirking, drawing or puckering of the epithelium as a result of exposure to substances such as alums and tannins. It is believed that astringent molecules react with salivary proteins, especially proline-rich proteins and glycoproteins that act as natural lubricants such as mucins, causing them to precipitate and aggregate, and the resulting loss of lubricity leads to the rough, "sandpapery", or dry sensation associated with astringency in the mouth.

Astringency can be intrinsically present in consumables. The most common examples are astringency in certain consumables such as tea, wine, yogurt and plant proteins such as soy and pea proteins. There are many naturally occurring bioactive compounds that although eliciting astringency, nevertheless have positive health effects. These compounds include, for example, flavanoids, polyphenols, peptides, minerals or terpenes. Astringency can also be introduced into consumables as the result of adding certain ingredients such as vitamins, minerals, amino acids, proteins, peptides or antioxidants. All of these ingredients might be employed as additives with the intention of improving the health and safety of food or for reasons of nourishment, but they can also carry with them a perception of astringency, undesired mouthfeel properties and/or off-tastes.

Current solutions to avoid astringency or off-tastes in consumables are limited to adding sugars, salts, flavorings, spices, etc. Such attempts essentially provide a distraction from the astringency or off-taste and hide or overwhelm the desired flavor components present in the consumable. The relatively recent tendency to reduce or eliminate basic ingredients like salt or sugar from food for reasons related to health and wellness, as well as the increased use of functional ingredients and nutraceuticals, has also increased the need for new taste-masking or mouthfeel-modulating technologies. There has also been a desire to reduce or eliminate astringency and off-tastes, and improve mouthfeel properties, by the addition of materials that are not in themselves standard flavor ingredients, that is, they do not possess a desirable taste, if any, to be suitable as flavor ingredient, but reduce or eliminate astringency and off-tastes, and improve mouthfeel properties, when used in low concentrations.

Mouthfeel (or "mouth feel") refers to the physical sensations experienced or felt in the mouth that are created by food and beverages, or compositions added to food or beverages. Mouthfeel may refer to textures that come into contact with the tongue, roof of the mouth, teeth, gums, or throat. Mouthfeel is considered to be distinct from taste/flavor, but is considered to have an equal or even greater impact on a person's enjoyment or preference for certain foods over others. Typical mouthfeel descriptors used to describe perceived sensations include acidity (metallic, citrusy, bright), density (close, airy), dryness (arid, scorched), graininess (particulate, powdery, dusty, grainy, chalky), gumminess (chewy, tough), hardness (crunchy, soft), heaviness (full, weighty), irritation (prickly, stinging), mouth coating (oily, buttery), roughness (abrasive, textured), slipperiness (slimy, stringy), smoothness (satiny, velvety), uniformity (even, uneven) and viscosity (full-bodied, light-bodied).

In the case of sugar replacers, the tastes they impart can present different temporal profiles, flavour-profiles or adaptation behaviors compared with the sugars which they replace, in whole or in part. For example, the sweet taste of natural and synthetic high-intensity sweeteners (HIS), is generally slower in onset and longer in duration than the sweet taste produced by sugar (sweet, short-chain, soluble carbohydrates, including glucose, fructose, sucrose, maltose and lactose) or high fructose corn syrups (HFCS) which is known as a replacement for sugar, and this can change the taste balance of an edible composition containing them. This can create unbalanced temporal taste profiles. In addition to the difference in temporal profile, high-intensity sweeteners generally exhibit lower maximal response than sugar; off-tastes including bitter, metallic, cooling, astringent, licorice-like taste and/or sweetness, which diminishes on iterative tasting.

As used herein the term "high-intensity sweetener", includes any synthetic sweetener or sweetener found in nature, which may be in raw, extracted, purified, or any other form, singularly or in combination thereof. High-intensity sweetener are compounds or mixtures of compounds which are many times (about 30 times and more, e.g. 100 - 800 times and more) sweeter than sucrose. For example, sucralose is about 600 times sweeter than sucrose, sodium cyclamate about 30 times, Aspartame about 160 - 200 times, and thaumatin about 2000 times sweeter.

Further examples of high-intensity sweeteners are acesulfame potassium, neotame, saccharine, swingle and stevia extracts, including enzymatically and chemically modified stevia extracts, mono-, di- and polyglycosylated steviol compounds, for example, Rebaudioside A (hereinafter "Reb A"), Rebaudioside B, Rebaudioside C, Rebaudioside D, Rebaudioside E, and Rebaudioside F, chemically and enzymatically modified steviosides, for example, transglucosylated sweet glycosides as disclosed in US2007082102. Further examples of steviol glycosides are Rebaudioside G, Rebaudioside X and Rebaudioside H and Rebaudioside M.

Swingle (also known as Luo Han Go (LHG) extract or Siraitia grosvenorii extract) contains various naturally-derived terpene glycosides, in particular various mogrosides including mogroside IV, mogroside V, siamenoside I, and 11-oxo mogroside V that impart high-intensity sweetness.

Of these, natural sweeteners such as stevia extracts have become favored as a result of the recent trend toward natural products.

However, all high-intensity sweeteners have undesirable after-taste in the form of off-notes, such as liquorice-like after-taste, and/or lingering sweetness. In the particular case of Reb A, this takes the form of a combination of an undesirable lingering sweetness and a liquorice-like after-taste. This after-taste detracts from the desired sugar-like sweetness and thus effectively masking undesirable tastes or off-tastes in edible compositions is key to consumer acceptance of many edible compositions. JP2018/102308A describes a taste improving agent for food and beverages.

Accordingly, there remains a need to provide taste modifying ingredients which are natural and/or suitable for vegans, i.e. "cleaner label", while at the same time improving mouthfeel, masking off-notes, and/or improving sweetness of consumables.

### SUMMARY

In one illustrative embodiment, a process for making a taste modifying ingredient comprises the steps of: a) heating millet grain at about 2 00 °C to about 300 °C for about 2 minutes to 30 minutes; b) treating the millet grain with a water-miscible organic solvent to obtain an extract; and c) recovering the extract, for use as a taste modifying ingredient.

In another illustrative embodiment, a method of masking perceived astringency and undesired off-notes imparted by a consumable composition or an additive, comprises making a taste modifying ingredient according to the process of claim 1, and the step of adding to the consumable or additive from 1 ppm to 1000 ppm of the taste modifying ingredient.

In yet another illustrative embodiment, a consumable composition comprises a consumable base, at least one component that imparts an undesired off-note or astringency, and from about 1 ppm to about 1000 ppm of a taste modifying ingredient obtained by the process of claim 1.

In another illustrative embodiment, a flavor composition comprises a characterizing flavour; and a taste modifying composition comprising a taste modifying ingredient obtained by the process of claim 1.

In another illustrative embodiment, a non-animal derived protein beverage comprises a non-animal protein; and a flavor composition comprising a characterizing flavour and a taste modifying composition. The taste modifying composition comprises a roasted millet extract.

These and other features, aspects and advantages of specific embodiments will become evident to those skilled in the art from a reading of the present disclosure.

### DETAILED DESCRIPTION

The following text sets forth a broad description of numerous different embodiments of the present disclosure. The description is to be construed as exemplary only and does not describe every possible embodiment since describing every possible embodiment would be impractical, if not impossible. It will be understood that any feature, characteristic, component, composition, ingredient, product, step or methodology described herein can be deleted, combined with or substituted for, in whole or part, any other feature, characteristic, component, composition, ingredient, product, step or methodology described herein. Numerous alternative embodiments could be implemented, using either current technology or technology developed after the filing date of this patent, which would still fall within the scope of the claims.

The present disclosure relates to the surprising finding that subjecting millet grain to a roasting process produces an extract or filtrate that can be used as a taste modifying ingredient, for example, to enhance sweetness of certain sweeteners, to improve the mouthfeel of a consumable and/or to mask off-notes of a consumable. In particular, the present disclosure relates to the surprising finding that the taste modifying ingredients described herein can be used to provide a low-calorie carbonated beverage with a high intensity artificial sweetener system with improved mouthfeel and sweetness. Similarly, the present disclosure relates to the surprising finding that the taste modifying ingredients described herein can be used to mask off-notes of a consumable comprising non-animal derived protein.

The present disclosure relates to a process for making a taste modifying ingredient comprising the steps of: a) heating millet grain at about 2 00 °C to about 300 °C for about 2 minutes to about 30 minutes; b) treating the millet grain with a water-miscible organic solvent to obtain an extract; and c) recovering the extract, for use as a taste modifying ingredient.

The term "millet" refers to a group of highly variable small-seeded grasses, widely grown around the world as cereal crops or grains for fodder and human food. Millets are important crops in the semiarid tropics of Asia and Africa (especially in India, Mali, Nigeria, and Niger), with 97% of millet production in developing countries. The crop is favored due to its productivity and short growing season under dry, high-temperature conditions. Grains are classified as Positive, Neutral and Negative. Millet range of grains constitute as Positive and Neutral grains. Among the Positive Millet Grains, which have dietary fibre from 8 % to 12.5 % are Foxtail (*kannada.* Navane), Barnyard (*kannada.* Oodalu), Kodo (*kannada.* Araka), Little (*kannada.* Samai) and Brown Top (*kannada.* Korale). Whereas Pearl (*kannada.* Sajje), Finger (*kannada.* Ragi), Proso (*kannada.* Baragu), Great Millet (White Jowar) and Corn classified as neutral grains, having a little lesser fibre and other nutrients. The millet used according to the present disclosure is readily available on the market. Without limitation, suitable millet grain is commercially available from Healthy Food Ingredients (Fargo, ND). Similar materials are also commercially available from a variety of sources.

According to one embodiment, the millet is heated whereby the endogenous enzyme in the grain may be deactivated. The heating means may be any suitable means, for example, roasting. The heating may be conducted either in a closed system or in an open system. In one embodiment, the millet may be heated at from about 100 °C to about 200 °C for about 10 minutes to about 30 minutes. In yet another embodiment, the millet may be heated at from about 200 °C to about 275 °C for about 4 minutes to about 8 minutes.

According to the present disclosure, once the millet has been heated or roasted, the millet is treated with a solvent to obtain an extract. The solvent should not present any negative aesthetics when employed in consumable compositions. The extraction solvent is a water-miscible organic solvent and may be selected from the group consisting of water-miscible alcohols, such as ethanol, glycerol, ethylene glycol, propylene glycol, or derivatives thereof, such as triacetine; or miglyol. In one embodiment, a mixture of water and propylene glycol may be used. In another embodiment, a mixture of water and ethanol may be used.

The extract mixture may include the water and solvent in weight ratio between about 0:1 and about 1:0, or any ratio within that range. In one example, the weight ratio of propylene glycol to water may be 1:1. In another example, the weight ratio of ethanol to water may be 1:4, or in another embodiment, 1:2.5.

The extraction will be performed under suitable conditions. As will be apparent to the skilled person, the temperature and pH should be within a suitable range for extraction to occur to the desired degree. The incubation length will vary accordingly, with shorter incubations when conditions are nearer to the optimum conditions. Subjecting the incubated mixture to agitation, for example by stirring (e.g. at 50 to 500 rpm or 100 to 200 rpm) may improve the extraction. The extraction may, for example, be performed at a temperature ranging from about 30°C to about 80°C. The extraction step for example, takes place for a period of time ranging from about 12 hours to about 24 hours.

The product of the extraction may, for example, be used directly as a taste modifying ingredient. However, the methods may, for example, comprise one or more additional steps. In particular, the solid matter (i.e. grains) are removed via solid-liquid separation methods in order to recover the extract or filtrate. In one embodiment, the extraction mixture after incubation was cooled to room temperature and the mixture was submitted to a separation step, for example by centrifugation, so as to recover the extract or filtrate. In accordance with the present disclosure, the extract can be either maintained as it is in liquid form or converted into a powder using mild conditions, for example, spray drying or freeze drying.

### Products

The taste modifying ingredient made by the extraction of roasted millet (roasted millet taste modifying extract) herein may be used directly in flavour compositions and/or consumable compositions or may undergo further processing as described above. The taste modifying ingredient may, for example, be considered to be a natural product for food labelling and/or food regulation reasons.

The final form of the taste modifying ingredient may be chosen according to methods well known in the art and will depend on the particular food application. For liquid foods, the taste modifying ingredient can be used without further processing in its liquid form. For dry applications, the spray-dried concentrated taste modifying ingredient can be used. The taste modifying ingredient may be directly added to consumables, or may be provided as part of a flavour composition for flavouring or seasoning consumables.

According to the present disclosure, flavour compositions may include a characterizing flavour and a taste modifying composition. The term "characterizing flavour" refers to a flavour that is perceived by an individual to be predominant upon consumption by the individual.

In one embodiment, the taste modifying compositions include the taste modifying ingredient derived from roasted millet. The characterizing flavour and the taste modifying composition should be present in the flavour composition in an organoleptically effective amount. This amount will depend upon the nature of the characterizing flavour and taste modifying composition, as well as the nature of the flavour composition and the effect that is desired to be achieved, and it is within the purview of the skilled person to experiment with the desired amounts.

Flavour compositions may also contain one or more food grade excipient(s). Suitable excipients for flavour compositions are well known in the art and include, for example, without limitation, solvents (including water, alcohol, ethanol, oils, fats, vegetable oil, and miglyol), binders, diluents, disintegranting agents, lubricants, flavouring agents, colouring agents, preservatives, antioxidants, emulsifiers, stabilisers, flavour-enhancers, sweetening agents, anti-caking agents, and the like. Examples of such carriers or diluents for flavours may be found e.g. in "Perfume and Flavour Materials of Natural Origin", S. Arctander, Ed., Elizabeth, N.J., 1960; in "Perfume and Flavor Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998 , and "CTFA Cosmetic Ingredient Handbook", J.M. Nikitakis (ed.), 1st ed., The Cosmetic, Toiletry and Fragrance Association, Inc., Washington, 1988.

The flavour composition may have any suitable form, for example liquid or solid, wet or dried, or in encapsulated form bound to or coated onto carriers/particles or as a powder. The flavour composition may include the characterizing flavour in an amount from about 0.01 to about 10%, in another embodiment from about 0.01 to about 5%, in yet another embodiment from about 0.01 to about 1%, or any individual number within the range, by weight of the flavour composition. In another embodiment, a consumable may include the characterizing flavour in an amount from about 0.001 to about 0.5%, in another embodiment from about 0.01 to about 0.3%, in yet another embodiment from about 0.02 to about 0.1%, or any individual number within the range, by weight of the consumable.

In a typical embodiment, the flavour composition includes from about 0.01% to about 10% of the taste modifying composition, by weight of the flavour composition, and depending upon the particular application desired. In one embodiment, the flavour composition comprises from about 0.01% to about 5% of the taste modifying composition, by weight of the flavour composition. In another embodiment, the flavour composition may comprise from about 0.01% to about 1% or any individual number within the range of the taste modifying composition, by weight of the flavour composition.

In another embodiment, the amount in which the roasted millet taste modifying extract may be added to a consumable or additive may vary within wide limits and depends, inter alia, on the nature of the consumable or additive, on the particular desired mouthfeel or astringency-modifying effect, as well as the nature and concentration of the ingredient or ingredients in the consumable or additive that are responsible for the astringency that must be eliminated, suppressed or reduced. It is well within the purview of the person skilled in the art to decide on suitable quantities of the roasted millet taste modifying extract to incorporate into a consumable or additive depending on the end use and desired effect.

According to certain embodiments, the amount of roasted millet taste modifying extract present in the consumable or additive is in a concentration of from at least about 1 ppm to about 1,000 ppm. According to certain embodiments, the amount of roasted millet taste modifying extract in the consumable or additive may be in a concentration of from about 1 ppm to about 800 ppm. According to certain embodiments, the amount of roasted millet taste modifying extract present in the consumable or additive may be in a concentration of from about 1 ppm to about 500 ppm. According to certain embodiments, the amount of roasted millet taste modifying extract in the consumable or additive may be in a concentration of from about 1 ppm to about 250 ppm. According to certain embodiments, the amount of roasted millet taste modifying extract present in the consumable or additive may be in a concentration of from about 1 ppm to about 100 ppm. According to certain embodiments, the amount of roasted millet taste modifying extract present in the consumable or additive may be in a concentration of from about 1 ppm to about 50 ppm. According to certain embodiments, the amount of roasted millet taste modifying extract is present in the consumable or additive may be in a concentration of from about 1 ppm to about 25 ppm. According to certain embodiments, the amount of roasted millet taste modifying extract is present in the consumable or additive may be in a concentration of from about 1 ppm to about 10 ppm. According to certain embodiments, the amount of roasted millet taste modifying extract present in the consumable or additive may be in a concentration of from about 1 ppm to about 5 ppm.

According to certain embodiments, the amount of roasted millet taste modifying extract may be present in a reduced sugar CSD in a concentration of from about 1 ppm to about 10 ppm; in another embodiment of from about 1 ppm to about 6 ppm; and in yet another embodiment of from about 2 ppm to about 4 ppm. According to certain embodiments, the amount of roasted millet taste modifying extract may be present in dairy, non-dairy and non-animal protein containing consumables in a concentration of from about 100 ppm to about 1000 ppm; in another embodiment of from about 250 ppm to about 800 ppm; and in yet another embodiment of from about 250 ppm to about 400 ppm.

When expressed as "ppm", the concentration is parts per million by weight based on the total weight of the consumable or additive, as the situation dictates. It should be understood that when a range of values is described in the present disclosure, it is intended that any and every value within the range, including the end points, is to be considered as having been disclosed. For example, "a range of from 1 ppm to 1000 ppm" of roasted millet taste modifying extract is to be read as indicating each and every possible number along the continuum between 1 and 1000. It is to be understood that the inventors appreciate and understand that any and all values within the range are to be considered to have been specified, and that the inventors have possession of the entire range and all the values within the range.

In the present disclosure, the term "about" used in connection with a value is inclusive of the stated value and has the meaning dictated by the context. For example, it includes at least the degree of error associated with the measurement of the particular value. One of ordinary skill in the art would understand the term "about" is used herein to mean that an amount of "about" of a recited value produces the desired degree of effectiveness in the compositions and/or methods of the present disclosure. One of ordinary skill in the art would further understand that the metes and bounds of "about" with respect to the value of a percentage, amount or quantity of any component in an embodiment can be determined by varying the value, determining the effectiveness of the compositions or methods for each value, and determining the range of values that produce compositions or methods with the desired degree of effectiveness in accordance with the present disclosure.

The consumable or additive may include a base. As used herein, the term "base" refers to all the ingredients necessary for the consumable or additive, apart from the roasted millet taste modifying extract. These will naturally vary in both nature and proportion, depending on the nature and use of the consumable or additive, but they are all well known to the art and may be used in art-recognized proportions. The formulation of such a base for every conceivable purpose is therefore within the ordinary skill of the art.

Without limitation, and only by way of illustration, suitable bases may include, anti-caking agents, anti-foaming agents, anti-oxidants, binders, colourants, diluents, disintegrants, emulsifiers, encapsulating agents or formulations, enzymes, fats, flavour-enhancers, flavouring agents, gums, polysaccharides, preservatives, proteins, solubilisers, solvents, stabilisers, sugar-derivatives, surfactants, sweetening agents, vitamins, waxes, and the like. Solvents which may be used are known to those skilled in the art and include e.g. water, ethanol, ethylene glycol, propylene glycol, glycerine and triacetin. Encapsulants and gums include maltodextrin, gum arabic, alginates, gelatine, modified starch, other polysaccharides, and proteins.

Examples of excipients, carriers, diluents or solvents for flavor compounds may be found e.g. in "Perfume and Flavour Materials of Natural Origin", S. Arctander, Ed., Elizabeth, N.J., 1960; in "Perfume and Flavour Chemicals", S. Arctander, Ed., Vol. I & II, Allured Publishing Corporation, Carol Stream, USA, 1994; in "Flavourings", E. Ziegler and H. Ziegler (ed.), Wiley-VCH Weinheim, 1998, and "CTFA Cosmetic Ingredient Handbook", J. M. Nikitakis (ed.), 1st ed., The Cosmetic, Toiletry and Fragrance Association, Inc., Washington, 1988.

According to certain embodiments, roasted millet taste modifying extract may be added to a consumable as part of an additive, wherein the additive comprises at least one flavor-providing ingredient. Roasted millet taste modifying extract may be added directly to a consumable or pre-mixed with certain ingredients of the consumable. For example, roasted millet taste modifying extract may be admixed with substances that impart astringency to form an additive that may be thereafter added to the remaining ingredients of the consumable.

Non-limiting examples of suitable flavor-providing ingredients include natural flavours, artificial flavours, spices, seasonings, and the like. These include synthetic flavor oils and flavoring aromatics and/or oils, oleoresins, essences, and distillates, and combinations thereof.

Flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavoring agents include artificial, natural and synthetic fruit flavors such as vanilla, and citrus oils including lemon, orange, lime, grapefruit, yuzu, sudachi, and fruit essences including apple, pear, peach, grape, raspberry, blackberry, gooseberry, blueberry, strawberry, cherry, plum, prune, raisin, cola, guarana, neroli, pineapple, apricot, banana, melon, apricot, cherry, tropical fruit, mango, mangosteen, pomegranate, papaya, and so forth.

Additional exemplary flavors imparted by a flavor-producing ingredient may include a milk flavor, a butter flavor, a cheese flavor, a cream flavor, and a yogurt flavor, a vanilla flavor, tea or coffee flavors, such as a green tea flavor, an oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a chamomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; a nut flavor such as an almond flavor, a hazelnut flavor, a macadamia nut flavor, a peanut flavor, a pecan flavor, a pistachio flavor, and a walnut flavor; floral flavors; and vegetable flavors, such as an onion flavor, a garlic flavor, a cabbage flavor, a carrot flavor, a celery flavor, mushroom flavor, and a tomato flavor.

Generally any flavor-producing ingredient or food additive such as those described in "Chemicals Used in Food Processing", Publication No 1274, pages 63-258, by the National Academy of Sciences, can be used.

Ancillary ingredients may be present to provide other benefits such as enhanced stability, ease of incorporation into a consumable or additive and enhanced nutritional value. Non-limiting typical examples of such ancillary ingredients include stabilizers, emulsifiers, preservatives, gums, starches, dextrins, vitamins and minerals, functional ingredients, salts, antioxidants, and polyunsaturated fatty acids. Particular examples are emulsifiers and carriers, useful in spray drying processes. Non-limiting examples of these are modified starches, such as Capsul.TM., and maltodextrin.

The additive may be a single ingredient or a blend of ingredients, or it may be encapsulated in any suitable encapsulant, such as those mentioned above. The additive may be prepared by any suitable method, such as spray drying, extrusion and fluidized bed drying.

Roasted millet taste modifying extract may be used in a wide variety of consumables or applications and is not restricted to any particular physical mode or product form. According to the present disclosure, the term "consumable" refers to products for consumption by a subject, typically via the oral cavity (although consumption may occur via non-oral means such as inhalation), for at least one of the purposes of enjoyment, nourishment, or health and wellness benefits. Consumables may be present in any form including, but not limited to, liquids, solids, semi-solids, tablets, capsules, lozenges, strips, powders, gels, gums, pastes, slurries, solutions, suspensions, syrups, aerosols and sprays. The term also refers to, for example, dietary and nutritional, and health and wellness supplements. Consumables include compositions that are placed within the oral cavity for a period of time before being discarded but not swallowed. It may be placed in the mouth before being consumed, or it may be held in the mouth for a period of time before being discarded. It has been found that, in conjunction with non-animal derived, high protein beverages, non-dairy beverages, dairy products, carbonated soft drinks, and non-alcoholic beverags, astringency-masking effects of roasted millet taste modifying extract are especially enhanced.

Broadly, consumables include, but are not limited to, comestibles of all kinds, confectionery products, baked products, sweet products, savoury products, fermented products, dairy products, non-dairy products, beverages, nutraceuticals and pharmaceuticals.

Non-limiting examples of consumables include: wet/liquid soups regardless of concentration or container, including frozen soups. For the purpose of this definition soup(s) means a food prepared from meat, poultry, fish, vegetables, grains, fruit and other ingredients, cooked in a liquid which may include visible pieces of some or all of these ingredients. It may be clear (as a broth) or thick (as a chowder), smooth, pureed or chunky, ready-to-serve, semi-condensed or condensed and may be served hot or cold, as a first course or as the main course of a meal or as a between meal snack (sipped like a beverage), soup may be used as an ingredient for preparing other meal components and may range from broths (consomme) to sauces (cream or cheese-based soups); dehydrated and culinary foods, including cooking aid products such as: powders, granules, pastes, concentrated liquid products, including concentrated bouillon, bouillon and bouillon like products in pressed cubes, tablets or powder or granulated form, which are sold separately as a finished product or as an ingredient within a product, sauces and recipe mixes (regardless of technology); meal solutions products such as: dehydrated and freeze dried soups, including dehydrated soup mixes, dehydrated instant soups, dehydrated ready-to-cook soups, dehydrated or ambient preparations of ready-made dishes, meals and single serve entrees including pasta, potato and rice dishes; meal embellishment products such as: condiments, marinades, salad dressings, salad toppings, dips, breading, batter mixes, shelf stable spreads, barbecue sauces, liquid recipe mixes, concentrates, sauces or sauce mixes, including recipe mixes for salad, sold as a finished product or as an ingredient within a product, whether dehydrated, liquid or frozen; beverages, including beverage mixes and concentrates, including but not limited to, alcoholic and non-alcoholic ready to drink and dry powdered beverages, carbonated and non-carbonated beverages, e.g., sodas, fruit or vegetable juices, alcoholic and non-alcoholic beverages, teas such as green tea and black tea, wine such as red wine; confectionery products, e.g., cakes, cookies, pies, candies, chewing gums, gelatins, ice creams, sorbets, puddings, jams, jellies, salad dressings, and other condiments, cereal, and other breakfast foods, canned fruits and fruit sauces and the like.

In a particular embodiment, roasted millet taste modifying extract can reduce or remove the astringency imparted by certain consumables or additives that have reduced or no sugar content. In certain embodiments, the consumables or additives may include a non-nutritive sweetener. In certain embodiments, the non-nutritive sweetener is selected from the group consisting of a steviol glycoside, Lo Han Guo sweetener, rubusoside, siamenoside, monatin, curculin, glycyrrhizic acid, neohesperidin, dihydrochalcone, glycyrrhizin, glycyphyllin, phloridzin, trilobatin, phyllodulcin, brazzein, hernandulcin, osladin, polypodoside A, baiyunoside, pterocaryoside A and B, mukurozioside, thaumatin, monellin, mabinlins I and II, phlomisoside I, periandrin I, abrusoside A, and cyclocarioside I, mogroside IV, mogroside V, or combinations thereof. In some embodiments, the non-nutritive sweetener is a steviol glycoside. In particular embodiments, the steviol glycoside is selected from the group consisting of stevioside, rebaudioside A, rebaudioside B, rebaudioside C, rebaudioside D, rebaudioside E, rebaudioside F, rebaudioside G rebaudioside H rebaudioside I, rebaudioside J, rebaudioside K, rebaudioside L, rebaudioside M, rebaudioside N, rebaudioside O, rebaudioside P, rebaudioside Q, steviolbioside, dulcoside A, and combinations thereof.

Astringency may be formed as the result of one or more ingredients being added to, or present in, food or beverage products. Astringent substances are present in vast categories of consumables including, but not limited to, beverages such as tea and wine, dairy products, dessert products, savory products, salad dressings, sauces, condiments, alcoholic beverages, confections, gums, and medicaments. Astringency may be imparted by salts of multivalent metallic cations (aluminum, chromium, zinc, lead, calcium, magnesium, etc.), vegetable tannins (e.g., gallotannic acid), dehydrating agents (e.g., ethyl alcohol, acetone, glycerine), proteins, as well as a wide variety of organic compounds and mineral acids.

A typical example of a substance providing an astringent impression is green tea, which contains several polyphenols, known as catechins, which are known to be astringent, namely, catechin, epigallocatechin gallate, epigallocatechin, epicatechin gallate, epicatechin and their respective stereoisomers and derivatives. Other examples of substances that impart astringency are proteins, such as pea protein, soy protein and whey protein. Further examples of astringent imparting substances are the theaflavins of black tea, namely, theaflavin, theaflavin-3-gallate, theaflavin-3'-gallate, theaflavin-3,3'-digallate, and theaflavic acid. Further examples of astringent imparting substances are the tannins (or tannoids) in wine. The taste of some substances may be perceived as a mixture of bitterness and astringency. Thus, for example, the astringent taste of green tea, certain proteins and wine is sometimes perceived as a mixture of bitterness/astringency.

According to certain embodiments, the disclosed roasted millet taste modifying extract and methods are used to reduce or eliminate astringency imparted by beverages. Exemplary beverages include, but are not limited to, flavoured water, soft drinks, fruit drinks, coffee-based drinks, tea-based drinks, juice-based drinks (includes fruit and vegetable), milk-based drinks, yoghurt drinks, gel drinks, carbonated or non-carbonated drinks, fountain drinks, frozen drinks, cola drinks, sports drinks, energy drinks, fortified/enhanced drinks, fermented drinks, smoothie drinks, powdered drinks, alcoholic or non-alcoholic drinks, and ready to drink liquid formulations of these beverages.

According to certain embodiments, the disclosed roasted millet taste modifying extract and methods are used to reduce or eliminate astringency imparted by protein. According to certain embodiments, the disclosed roasted millet taste modifying extract and methods are used to reduce or eliminate astringency imparted by soy protein and/or pea protein.

According to certain embodiments, the roasted millet taste modifying extract is used to reduce or eliminate astringency imparted by dairy products, such as milk or yoghurt.

Exemplary dairy products include, but are not limited to, cheese, cheese sauces, cheese-based products, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavoured, functional and other condensed milk, flavoured milk drinks, dairy only flavoured milk drinks, flavoured milk drinks with fruit juice, soy milk, sour milk drinks, fermented dairy drinks, coffee whiteners, powder milk, flavoured powder milk drinks, cream, yoghurt, plain/natural yoghurt, flavoured yoghurt, fruited yoghurt, probiotic yoghurt, drinking yoghurt, regular drinking yoghurt, probiotic drinking yoghurt, chilled and shelf-stable desserts, dairy-based desserts, and soy-based desserts.

According to certain embodiments, the disclosed method is used to reduce or eliminate astringency imparted by non-animal derived protein such as plant protein. Exemplary plant proteins include soy protein and pea protein. As used herein, soy includes all consumables containing soy in any form, including soybean oil used either alone, in combination, for example as a nutraceutical, or as a medicament, soy bean curd, soy milk, soy butter or soy paste. The plant protein may comprise algae (such as spirulina), beans (such as black beans, canelli beans, kidney beans, lentil beans, lima beans, pinto beans, soy beans, white beans), broccoli, edamame, mycoprotein, nuts (such as almonds, brazil nuts, cashews, peanuts, pecans, hazelnuts, pine nuts, walnuts), peas (such as black eyed peas, chickpeas, green peas), potatoes, oatmeal, seeds (such as chia, flax, hemp, pumpkin, sesame, sunflower), seitan (i.e., wheat gluten-based), tempeh, tofu, and mixtures thereof. According to certain embodiments, the plant protein is a potato-derived protein. In another embdoment, the non-animal protein is selected from the group consisting of grain; legume; pulses; seed; oilseed; nut; algal; mycoprotein; fungal protein; insects and leaf protein.

According to certain embodiments, the method may be used to reduce or eliminate astringency perception in meat analog products containing non-animal protein. "Meat analog" is a food product that approximates the aesthetic qualities and/or chemical characteristics of certain types of meat. The term Meat analogue includes those prepared with textured vegetable proteins (TVP), high moisture meat analogue (HMMA) and low moisture meat analogue (LMMA) products.

Food scientists have devoted much time developing methods for preparing acceptable meat-like food applications, such as beef, pork, poultry, fish, and shellfish analogs, from a wide variety of non-animal proteins. One such approach is texturization into fibrous meat analogs, for example, through extrusion processing. The resulting meat analog products exhibit improved meat-like visual appearance and improved texture.

The one or more sweeteners may comprise one or more natural sweeteners and/or one or more artificial sweeteners. The one or more sweeteners may, for example, be selected from sucrose, fructose, glucose, xylose, arabinose, rhamnose, tagatose, allulose, trehalose, isomaltulose, steviol glycosides (e.g. rebaudioside A, rebaudioside B, rebaudioside C, rebaudioside D, rebaudioside E, rebaudioside F, rebaudioside G, rebaudioside H, rebaudioside I, rebaudioside J, rebaudioside K, rebaudioside L, rebaudioside M, rebaudioside N, rebaudioside O, dulcoside A, dulcoside B, rubusoside, naringin dihydrochalcone, stevioside), mogrosides (e.g. grosvenorine II, grosvenorine I, 11-O-mogroside II (I), 11-O-mogroside II (II), 11-O-mogroside II (III), mogroside II (I), mogroside II (II), mogroside II (III), 11-dehydroxy-mogroside III, 11-O-mogroside III, mogroside III (I), mogroside III (II), mogroside IIIe, mogroside IIIx, mogroside IV (I) (siamenoside), mogroside IV (II), mogroside IV (III), mogroside IV (IV), deoxymogroside V (I), deoxymogroside V (II), 11-O-mogroside V (I), mogroside V isomer, mogroside V, iso-mogroside V, 7-O-mogroside V, 11-O-mogroside VI, mogroside VI (I), mogroside VI (II), mogroside VI (III) (neomogroside) and mogroside VI (IV)), stevia, trilobatin, rebusoside, aspartame, advantame, agave syrup, acesulfame potassium (AceK), high fructose corn syrup, neotame, saccharin, sucralose, high fructose corn syrup, starch syrup, Luo Han Guo extract, neohespiridin, dihydrochalcone, naringin, sugar alcohols (e.g. sorbitol, xylitol, inositol, mannitol, erythritol), cellobiose, psicose, and cyclamate.

The disclosure is further described with reference to the following non-limiting examples.

### EXAMPLES

### Preparation of Roasted Millet Extract with Propylene Glycol (PG)

Taste modifying ingredient was made by roasting millet grain (from Healthy Food Ingredients (Fargo, ND), at 260°C for approximately 4.5 minutes. The millet was cooled down to room temperature. 20 g of the roasted millet was extracted with a mixture of propylene glycol (50 g) and water (50 g) as follows: the mixture was incubated at 60°C with agitation for 12 hours; the mixture was centrifuged with a centrifuge for 10 minutes, whereby the solid matter was removed from the mixture, and the liquid was recovered. The recovered liquid was filtered through filter paper to obtain a taste modifying ingredient (TMI-PG).

### Preparation of Roasted Millet Extract with Ethanol (EtOH)

Taste modifying ingredient was made by roasting millet grain (from Healthy Food Ingredients (Fargo, ND), at 260°C for approximately 4.5 minutes. The millet was cooled down to room temperature. 16 g of the roasted millet was extracted with a mixture of ethanol (40 g) and water (16 g) as follows: the mixture was incubated at 60°C with agitation for 12 hours; the mixture was centrifuged with a centrifuge for 10 minutes, whereby the solid matter was removed from the mixture, and the liquid was recovered. The recovered liquid was filtered through filter paper to obtain a taste modifying ingredient (TMI-EtOH).

Taste modifying ingredients (TMI-PG) and (TMI-EtOH) were then tested in a number of commercial products as follows:

### Example 1 - Reduced Sugar CSD beverage #1

Six (6) expert tasters evaluated a reduced sugar beverage, a commercially available CSD that did not contain TMI-PG and compared it to the same beverage to which 5.3 ppm of TMI-PG was added.

Six (6) expert tasters evaluated a reduced sugar beverage, a commercially available CSD that did not contain TMI-PG and compared it to the same beverage to which 2.6 ppm of TMI-PG was added.

### Example 2 - Reduced Sugar CSD beverage #2

Six (6) expert tasters evaluated a reduced sugar beverage, a commercially available CSD that did not contain TMI-PG and compared it to the same beverage to which 3.2 ppm of TMI-PG was added.

Six (6) expert tasters evaluated a reduced sugar beverage, a commercially available CSD that did not contain TMI-PG and compared it to the same beverage to which 2.6 ppm of TMI-PG was added.

### Example 3 - Reduced Sugar CSD beverage #3

Six (6) expert tasters evaluated a reduced sugar beverage, a commercially available CSD that did not contain TMI-PG and compared it to the same beverage to which 5.3 ppm of TMI-PG was added.

Six (6) expert tasters evaluated a reduced sugar beverage, a commercially available CSD that did not contain TMI-PG and compared it to the same beverage to which 3.2 ppm of TMI-PG was added.

Six (6) expert tasters evaluated a reduced sugar beverage, a commercially available CSD that did not contain TMI-PG and compared it to the same beverage to which 2.6 ppm of TMI-PG was added.

For Examples 1-3 above, the sensory tests concluded on a perceived increase in sugary mouthfeel and reduction in off-notes from high-intensity sweeteners, particularly in bitterness and licorice-like aftertaste in the CSD containing TMI-PG as compared to the CSD that did not contain TMI-PG.

### Example 4 - Non-Dairy Beverage (Unsweetened Oat)

Six (6) expert tasters evaluated a non-dairy oat beverage that did not contain TMI-PG and compared it to the same non-dairy oat beverage to which 400 ppm of TMI-PG was added. The sensory test concluded on a perceived increase in creamy mouthfeel and reduction in aldehylic off-note in the non-dairy oat beverage containing TMI-PG as compared to the non-dairy oat beverage that did not contain TMI-PG.

### Example 5 - Non-Dairy Beverage (Unsweetened, Plant Protein Milk)

Six (6) expert tasters evaluated a non-dairy pea protein beverage that did not contain TMI-PG and compared it to the same non-dairy pea protein beverage to which 400 ppm of TMI-PG was added. The sensory test concluded on a perceived increase in creamy mouthfeel and reduction in bitterness and earthy/aldehylic off-note in the non-dairy pea protein beverage containing TMI-PG as compared to the non-dairy pea protein beverage that did not contain TMI-PG.

### Example 6 - Non-Dairy Beverage (Probiotic Dairy-Free Yogurt)

Six (6) expert tasters evaluated a non-dairy probiotic yogurt beverage that did not contain TMI-PG and compared it to the same non-dairy probiotic yogurt beverage to which 400 ppm of TMI-PG was added. The sensory test concluded on a perceived increase in creamy mouthfeel and reduction in bitterness in the non-dairy probiotic yogurt beverage containing TMI-PG as compared to the non-dairy probiotic yogurt beverage that did not contain TMI-PG.

### Example 7 - Non-Dairy Protein Beverage #1 (Vanilla Protein Shake)

Six (6) expert tasters evaluated a non-dairy protein beverage that did not contain TMI-PG and compared it to the same non-dairy protein beverage to which 800 ppm of TMI-PG was added. The sensory test concluded on a perceived increase in fuller mouthfeel and reduction in bitterness and cardboard-like off-notes in the non-dairy protein beverage containing TMI-PG as compared to the non-dairy protein beverage that did not contain TMI-PG.

### Example 8 - Non-Dairy Protein Beverage #2 (Vanilla Protein Shake)

Six (6) expert tasters evaluated a non-dairy protein beverage that did not contain TMI-PG and compared it to the same non-dairy protein beverage to which 800 ppm of TMI-PG was added. The sensory test concluded on a perceived increase in fuller mouthfeel and reduction in bitterness and cardboard-like off-notes in the non-dairy protein beverage containing TMI-PG as compared to the non-dairy protein beverage that did not contain TMI-PG.

### Example 9 - Plain, Low Fat Greek Yogurt

Six (6) expert tasters evaluated a plain, low fat greek yogurt that did not contain TMI-PG and compared it to the same plain, low fat greek yogurt to which 400 ppm of TMI-PG was added. The sensory test
in the plain, low fat greek yogurt containing TMI-PG as compared to the plain, low fat greek yogurt that did not contain TMI-PG.

### Example 10 - Plain, Fat-Free Greek Yogurt #1

Six (6) expert tasters evaluated a plain, fat-free greek yogurt that did not contain TMI-PG and compared it to the same a plain, low fat-free greek yogurt to which 800 ppm of TMI-PG was added. The sensory test concluded on a perceived increase in creamy mouthfeel in the a plain, fat-free greek yogurt containing TMI-PG as compared to the a plain, fat-free greek yogurt that did not contain TMI-PG.

### Example 11 - Plain, Fat-Free Greek Yogurt #2

Six (6) expert tasters evaluated a plain, fat-free greek yogurt that did not contain TMI-PG and compared it to the same plain, fat-free greek yogurt to which 400 ppm of TMI-PG was added. The sensory test concluded on a perceived increase in sweetness and slightly bitterness in the fat-free greek yogurt containing TMI-PG as compared to the fat-free greek yogurt that did not contain TMI-PG.

### Example 12 - Plain, Fat-Free Greek Yogurt #3

Six (6) expert tasters evaluated a plain, fat-free greek yogurt that did not contain TMI-EtOH and compared it to the same a plain, fat-free greek yogurt to which 800 ppm of TMI-EtOH was added. The sensory test concluded on a perceived increase in creamy mouthfeel in the fat-free greek yogurt containing TMI-EtOH as compared to the fat-free greek yogurt that did not contain TMI-EtOH.

### Example 13 - Plain, Almond Milk Yogurt

Six (6) expert tasters evaluated a plain, almond milk yogurt that did not contain TMI-PG and compared it to the same plain, almond milk yogurt to which 800 ppm of TMI-PG was added. The sensory test concluded on a perceived reduction in rancid and sour off-notes in the plain, almond milk yogurt containing TMI-PG as compared to the plain, almond milk yogurt that did not contain TMI-PG.

### Example 14 - Plain, Almond Milk Yogurt

Six (6) expert tasters evaluated a plain, almond milk yogurt that did not contain TMI-EtOH and compared it to the same plain, almond milk yogurt to which 800 ppm of TMI-EtOH was added. The sensory test concluded on a perceived reduction in rancid and sour off-notes in the plain, almond milk yogurt containing TMI-EtOH as compared to the plain, almond milk yogurt that did not contain TMI-EtOH.

### Example 15 - Plain, Soy Yogurt

Six (6) expert tasters evaluated a plain, soy yogurt that did not contain TMI-PG and compared it to the same plain, soy yogurt to which 800 ppm of TMI-PG was added. The sensory test concluded concluded on a perceived increase in creamy and fuller mouthfeel and reduction in tartness and astringency in the plain, soy yogurt containing TMI-PG as compared to the plain, soy yogurt that did not contain TMI-PG.

While particular embodiments of the present invention have been illustrated and described, it would be obvious to those skilled in the art that various other changes and modifications can be made without departing from the scope of the invention. It is therefore intended to cover in the appended claims all such changes and modifications that are within the scope of this invention.

## Claims

1. A process for making a taste modifying ingredient, the method comprising the steps of:
a. heating millet grain at 200 °C to 300 °C for 2 minutes to 30 minutes;
b. treating the millet grain with a water-miscible organic solvent to obtain an extract; and
c. recovering the extract, for use as a taste modifying ingredient.

2. A method of masking perceived astringency and undesired off-notes imparted by a consumable composition or an additive, comprising making a taste modifying ingredient according to the process of claim 1, and adding to the consumable or additive from 1 ppm to 1000 ppm of the taste modifying ingredient .

3. The method of claim 2, wherein the consumable comprises a beverage.

4. The method of claim 3, wherein the beverage is carbonated.

5. The method of claim 4, wherein the amount of the taste modifying ingredient present in the consumable composition or additive is from 1 ppm to 10 ppm.

6. The method of claim 4, wherein the beverage comprises one or more sweeteners.

7. The method of claim 6, wherein the one or more sweeteners are selected from sucrose, fructose, glucose, xylose, arabinose, rhamnose, tagatose, allulose, trehalose, isomaltulose, steviol glycosides, mogrosides, stevia, trilobatin, rubusoside, aspartame, advantame, agave syrup, acesulfame potassium (AceK), high fructose corn syrup, neotame, saccharin, sucralose, high fructose corn syrup, starch syrup, Luo Han Guo extract, neohespiridin, dihydrochalcone, naringin, sugar alcohols cellobiose, psicose, and cyclamate.

8. The method of claim 7, wherein the steviol glycosides are selected from rebaudioside A, rebaudioside B, rebaudioside C, rebaudioside D, rebaudioside E, rebaudioside F, rebaudioside G, rebaudioside H, rebaudioside I, rebaudioside J, rebaudioside K, rebaudioside L, rebaudioside M, rebaudioside N, rebaudioside O, dulcoside A, dulcoside B, rubusoside, naringin dihydrochalcone, stevioside, and mixtures thereof.

9. The method of claim 7, wherein the mogrosides are selected from grosvenorine II, grosvenorine I, 11-O-mogroside II (I), 11-O-mogroside II (II), 11-O-mogroside II (III), mogroside II (I), mogroside II (II), mogroside II (III), 11-dehydroxy-mogroside III, 11-O-mogroside III, mogroside III (I), mogroside III (II), mogroside IIIe, mogroside IIIx, mogroside IV (I) (siamenoside), mogroside IV (II), mogroside IV (III), mogroside IV (IV), deoxymogroside V (I), deoxymogroside V (II), 11-O-mogroside V (I), mogroside V isomer, mogroside V, iso-mogroside V, 7-O-mogroside V, 11-O-mogroside VI, mogroside VI (I), mogroside VI (II), mogroside VI (III) (neomogroside) and mogroside VI (IV), and mixtures thereof.

10. The method of claim 2, wherein the consumable comprises a dairy product or a dairy alternative product.

11. The method of claim 10, wherein the amount of taste modifying ingredient present in the consumable composition or additive is from 250 ppm to 800 ppm.

12. The method of claim 10, wherein the consumable comprises a yogurt.

13. A consumable composition comprising a consumable base, at least one component that imparts an undesired off-note or astringency, and from 1 ppm to 1000 ppm of a taste modifying ingredient obtained by the process of claim 1.

14. A flavour composition comprising:
a characterizing flavour; and
a taste modifying composition comprising a taste modifying ingredient obtained by the process of claim 1.

## Patentansprüche

1. Verfahren zur Herstellung eines geschmacksmodifizierenden Inhaltsstoffs, wobei das Verfahren die Schritte umfasst:
a. Erhitzen von Hirsekorn auf 200 °C bis 300 °C für 2 Minuten bis 30 Minuten;
b. Behandeln des Hirsekorns mit einem wassermischbaren organischen Lösungsmittel, um einen Extrakt zu erhalten; und
c. Gewinnen des Extrakts zur Verwendung als geschmacksmodifizierender Inhaltsstoff.

2. Verfahren zum Maskieren von wahrgenommener Adstringenz und unerwünschtem Beigeschmack, die von einer konsumierbaren Zusammensetzung oder einem Additiv vermittelt werden, umfassend Herstellen eines geschmacksmodifizierenden Inhaltsstoffs gemäß dem Verfahren nach Anspruch 1 und Zugeben von 1 ppm bis 1000 ppm des geschmacksmodifizierenden Inhaltsstoffs zu dem Konsumgut oder Additiv.

3. Verfahren nach Anspruch 2, wobei das Konsumgut ein Getränk umfasst.

4. Verfahren nach Anspruch 3, wobei das Getränk kohlensäurehaltig ist.

5. Verfahren nach Anspruch 4, wobei die Menge des geschmacksmodifizierenden Inhaltsstoffs, der in der konsumierbaren Zusammensetzung oder dem Additiv vorhanden ist, von 1 ppm bis 10 beträgt.

6. Verfahren nach Anspruch 4, wobei das Getränk ein oder mehrere Süßungsmittel umfasst.

7. Konsumgut nach Anspruch 6, wobei das eine oder die mehreren Süßungsmittel ausgewählt sind aus der Gruppe bestehend aus Saccharose, Fructose, Glucose, Xylose, Arabinose, Rhamnose, Tagatose, Allulose, Trehalose, Isomaltulose, Steviolglycosiden, Mogrosiden, Stevia, Trilobatin, Rubusosid, Aspartam, Advantam, Agavensirup, Acesulfam-Kalium (AceK), Maissirup mit hohem Fructosegehalt, Neotam, Saccharin, Sucralose, Maissirup mit hohem Fructosegehalt, Stärkesirup, Luo Han Guo-Extrakt, Neohespiridin, Dihydrochalcon, Naringin, Zuckeralkoholen, Cellobiose, Psicose und Cyclamat.

8. Verfahren nach Anspruch 7, wobei die Steviolglycoside ausgewählt sind aus Rebaudiosid A, Rebaudiosid B, Rebaudiosid C, Rebaudiosid D, Rebaudiosid E, Rebaudiosid F, Rebaudiosid G, Rebaudiosid H, Rebaudiosid I, Rebaudiosid J, Rebaudiosid K, Rebaudiosid L, Rebaudiosid M, Rebaudiosid N, Rebaudiosid O, Dulcoside A, Dulcoside B, Rubusosid, Naringindihydrochalcon, Steviosid, und Gemischen davon.

9. Verfahren nach Anspruch 7, wobei die Mogroside ausgewählt sind aus Grosvenorin II, Grosvenorin I, 11-0-Mogrosid II (I), 11-O-Mogrosid II (II), 11-0-Mogrosid II (III), Mogrosid II (I), Mogrosid II (II), Mogrosid II (III), 11-Dehydroxymogrosid III, 11-O-Mogrosid III, Mogrosid III (I), Mogrosid III (II), Mogrosid IIIe, Mogrosid IIIx, Mogrosid IV (I) (Siamenosid), Mogrosid IV (II), Mogrosid IV (III), Mogrosid IV (IV), Desoxymogrosid V (I), Desoxymogrosid V (II), 11-O-Mogrosid V (I), Mogrosid-V-isomer, Mogrosid V, Isomogrosid V, 7-O-Mogrosid V, 11-O-Mogrosid VI, Mogrosid VI (I), Mogrosid VI (II), Mogrosid VI (III) (Neomogrosid) und Mogrosid VI (IV) und Gemischen davon.

10. Verfahren nach Anspruch 2, wobei das Konsumgut ein Milchprodukt oder ein milchalternatives Produkt umfasst.

11. Verfahren nach Anspruch 10, wobei die Menge an geschmacksmodifizierendem Inhaltsstoff, der in der konsumierbaren Zusammensetzung oder dem Additiv vorhanden ist, 250 ppm bis 800 ppm beträgt.

12. Verfahren nach Anspruch 10, wobei das Konsumprodukt einen Joghurt umfasst.

13. Konsumierbare Zusammensetzung, umfassend eine konsumierbare Grundlage, wenigstens eine Komponente, die einen unerwünschten Beigeschmack oder Adstringenz verleiht, und 1 ppm bis 1000 ppm an einem geschmacksmodifizierenden Inhaltsstoff, der durch das Verfahren nach Anspruch 1 erhalten ist.

14. Aromazusammensetzung umfassend:
ein charakterisierendes Aroma; und
eine geschmacksmodifizierende Zusammensetzung umfassend einen geschmacksmodifizierenden Inhaltsstoff, der durch das Verfahren nach Anspruch 1 erhalten ist.

## Revendications

1. Procédé pour la préparation d'un ingrédient modifiant le goût, le procédé comprenant les étapes de :
a. chauffage de grain de millet à une température de 200 °C à 300 °C pendant 2 minutes à 30 minutes ;
b. traitement du grain de millet avec un solvant organique miscible à l'eau pour obtenir un extrait ; et
c. récupération de l'extrait, pour une utilisation comme ingrédient modifiant le goût.

2. Procédé de masquage de l'astringence perçue et de notes atypiques non souhaitées conférées par une composition consommable ou un additif, comprenant la préparation d'un ingrédient modifiant le goût selon le procédé de la revendication 1, et l'ajout au produit consommable ou à l'additif de 1 ppm à 1 000 ppm de l'ingrédient modifiant le goût.

3. Procédé selon la revendication 2, dans lequel le produit consommable comprend une boisson.

4. Procédé selon la revendication 3, dans lequel la boisson est gazeuse.

5. Procédé selon la revendication 4, dans lequel la quantité de l'ingrédient modifiant le goût présent dans la composition consommable ou l'additif est de 1 ppm à 10 ppm.

6. Procédé selon la revendication 4, dans lequel la boisson comprend un ou plusieurs édulcorants.

7. Procédé selon la revendication 6, dans lequel l'édulcorant ou les édulcorants sont choisis parmi le saccharose, le fructose, le glucose, le xylose, l'arabinose, le rhamnose, le tagatose, l'allulose, le tréhalose, l'isomaltulose, les glycosides de stéviol, les mogrosides, la stévia, la trilobatine, le rubusoside, l'aspartame, l'advantame, le sirop d'agave, l'acésulfame de potassium (AceK), le sirop de maïs à haute teneur en fructose, le néotame, la saccharine, le sucralose, le sirop de maïs à haute teneur en fructose, le sirop d'amidon, un extrait de Luo Han Guo, la dihydrochalcone de néohespéridine, la naringine, les alcools de sucres, le cellobiose, le psicose, et le cyclamate.

8. Procédé selon la revendication 7, dans laquelle les glycosides de stéviol sont choisis parmi le rébaudioside A, le rébaudioside B, le rébaudioside C, le rébaudioside D, le rébaudioside E, le rébaudioside F, le rébaudioside G, le rébaudioside H, le rébaudioside I, le rébaudioside J, le rébaudioside K, le rébaudioside L, le rébaudioside M, le rébaudioside N, le rébaudioside O, le dulcoside A, le dulcoside B, le rubusoside, la dihydrochalcone de naringine, le stévioside et leurs mélanges.

9. Procédé selon la revendication 7, dans lequel les mogrosides sont choisis parmi la grosvenorine II, la grosvenorine I, le 11-O-mogroside II (I), le 11-0-mogroside II (II), le 11-O-mogroside II (III), le mogroside II (I), le mogroside II (II), le mogroside II (III), le 11-désoxy-mogroside III, le 11-O-mogroside III, le mogroside III (I), le mogroside III (II), le mogroside IIIe, le mogroside IIIx, le mogroside IV (I) (siamenoside), le mogroside IV (II), le mogroside IV (III), le mogroside IV (IV), le désoxy-mogroside V (I), le désoxy-mogroside V (II), le 11-O-mogroside V (I), un isomère du mogroside V, le mogroside V, l'iso-mogroside V, le 7-O-mogroside V, le 11-O-mogroside VI, le mogroside VI (I), le mogroside VI (II), le mogroside VI (III) (néomogroside) et le mogroside VI (IV) et des mélanges de ceux-ci.

10. Procédé selon la revendication 2, dans lequel le produit consommable comprend un produit laitier ou un produit alternatif aux produits laitiers.

11. Procédé selon la revendication 10, dans lequel la quantité d'ingrédient modifiant le goût présent dans la composition consommable ou l'additif est de 250 ppm à 800 ppm.

12. Procédé selon la revendication 10, dans lequel le produit consommable comprend un yogourt.

13. Composition consommable comprenant une base consommable, au moins un composant qui confère une note atypique non souhaitée ou une astringence, et de 1 ppm à 1 000 ppm d'un ingrédient modifiant le goût obtenu par le procédé de la revendication 1.

14. Composition d'arôme comprenant :
un arôme caractérisant ; et
une composition modifiant le goût comprenant un ingrédient modifiant le goût obtenu par le procédé de la revendication 1.
